(19) **Europäisches Patentamt European Patent Office Office européen des brevets**

(11) **EP 4 730 429 A1**

(12) **EUROPEAN PATENT APPLICATION**

(43) Date of publication:
22.04.2026 Bulletin 2026/17

(21) Application number: 25203956.5

(22) Date of filing: **23.09.2025**

(51) International Patent Classification (IPC):
*H01M 4/36* (2006.01)      *H01M 4/58* (2010.01)
*H01M 10/0525* (2010.01)

(52) Cooperative Patent Classification (CPC):
**H01M 4/5825; H01M 4/366; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.10.2024 JP 2024179757**

(71) Applicant: **TOYOTA JIDOSHA KABUSHIKI KAISHA**
**Toyota-shi, Aichi-ken 471-8571 (JP)**

(72) Inventors:
• YOKOE, Kenji
  **Aichi-ken, 471-8571 (JP)**
• EGUCHI, Tatsuya
  **Kariya-shi, Aichi-ken, 448-8671 (JP)**
• KIMIJIMA, Takeshi
  **Kariya-shi, Aichi-ken, 448-8671 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **POSITIVE ELECTRODE ACTIVE MATERIAL, BATTERY, AND METHOD OF PRODUCING POSITIVE ELECTRODE ACTIVE MATERIAL**

(57)      A positive electrode active material comprises secondary particles (2) and titanium bodies (3), wherein each of the secondary particles (2) includes primary particles (1), each of the primary particles (1) includes a phosphate compound having an olivine-type structure, the titanium bodies (3) include titanium oxide having a rutile-type structure, and at least one of the titanium bodies (3) is present on a surface of the primary particle (1).

FIG.1

## Description

CROSS REFERENCE TO RELATED APPLICATIONS

This nonprovisional application is based on Japanese Patent Application No. 2024-179757 filed on October 15, 2024, with the Japan Patent Office, the entire contents of which are hereby incorporated by reference.

BACKGROUND

Field

The present disclosure relates to a positive electrode active material, a battery, and a method of producing a positive electrode active material.

Description of the Background Art

Japanese Patent Laying-Open No. 2017-21999 discloses a positive electrode active material for a lithium-ion secondary battery, wherein some of Mn of lithium manganese iron phosphate (LMFP) is further replaced by Co alone or by both Co and Zn.

SUMMARY

As a positive electrode active material, phosphate compounds having an olivine-type structure have been developed. Phosphate compounds having an olivine-type structure tend to have insufficient charge-discharge properties. For the purpose of improving charge-discharge properties, Japanese Patent Laying-Open No. 2017-21999 provides LMFP that has the above-described characteristics. Charge-discharge properties of lithium-ion secondary batteries can be further improved by lowering reaction resistance.

An object of the present disclosure is to lower reaction resistance.

Hereinafter, the technical configuration and effects of the present disclosure will be described. It should be noted that the action mechanism according to the present disclosure includes presumption. The action mechanism does not limit the technical scope of the present disclosure.

[1] A positive electrode active material comprising:

secondary particles; and
titanium bodies, wherein
each of the secondary particles includes primary particles,
each of the primary particles includes a phosphate compound having an olivine-type structure,
the titanium bodies include titanium oxide having a rutile-type structure, and
at least one of the titanium bodies is present on a surface of the primary particle.

When a titanium body including titanium oxide having a rutile-type structure is present on the surface of a primary particle that includes a phosphate compound having an olivine-type structure (here, the primary particle is a constituent of a secondary particle of the positive electrode active material), reaction resistance of the lithium-ion secondary battery is expected to be lowered.

[2] The positive electrode active material according to [1], wherein at least one of the titanium bodies is present on a surface of the primary particle and also at a grain boundary of the primary particle.

[3] The positive electrode active material according to [1] or [2], wherein the titanium body has a maximum Feret diameter from 100 nm to 500 nm.

[4] The positive electrode active material according to any one of [1] to [3], wherein the titanium bodies further include lithium titanate having a spinel-type structure.

When including lithium titanate having a spinel-type structure, the titanium body is expected to be adhered to the surface of a primary particle.

[5] The positive electrode active material according to [4], wherein

the titanium bodies optionally further include titanium oxide having an anatase-type structure, and
in the positive electrode active material, an amount-of-substance fraction of a content of the lithium titanate having a spinel-type structure relative to a total content of the lithium titanate having a spinel-type structure, the titanium oxide having a rutile-type structure, and the titanium oxide having an anatase-type structure is from 0.01 to 0.50.

When the amount-of-substance fraction of lithium titanate having a spinel-type structure included in the titanium bodies falls within the above-mentioned range, reaction resistance of the lithium-ion secondary battery is expected to be further lowered.

[6] The positive electrode active material according to any one of [1] to [5], wherein the phosphate compound having an olivine-type structure is lithium manganese iron phosphate.

[7] A battery comprising the positive electrode active material according to any one of [1] to [6].

[8] A battery comprising:

a positive electrode;
a negative electrode; and
an electrolyte solution, wherein
the positive electrode includes the positive electrode active material according to any one of [1] to [6], and
the electrolyte solution includes ethylene carbonate.

[9] The battery according to [8], having a bipolar structure.

[10] A method of producing a positive electrode active material, wherein

the method is a method of producing the positive electrode active material according to any one of [1] to [6], and
the method comprises:

(a) mixing a manganese compound, a lithium compound, a phosphate compound, titanium oxide having a rutile-type structure, and a solvent to form a slurry;
(b) forming first precursor particles by drying the slurry;
(c) performing first heat treatment of the first precursor particles to form second precursor particles; and
(d) performing second heat treatment of the second precursor particles to produce a phosphate compound having an olivine-type structure.

By the production method according to [10] above, the positive electrode active material according to any one of [1] to [6] above can be produced.

In the following, an embodiment of the present disclosure (which may be simply called "the present embodiment" hereinafter) and an example of the present disclosure (which may be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that any configurations of the present embodiment may be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating a secondary particle according to the present embodiment.
Fig. 2 is a schematic flowchart illustrating a method of producing a positive electrode active material according to the present embodiment.
Fig. 3 is a schematic perspective view illustrating a battery according to the present embodiment.
Fig. 4 is a schematic view of a cross section cut along the line VI-VI in Fig. 3.
Fig. 5 is a table showing experiment results of positive electrode active materials of Nos. 1 to 7 in Examples.

DESCRIPTION OF THE PREFERRED EMBODIMENTS

<Terms and Phrases>

Expressions such as "comprise", "include", and "have", and other similar terms are open-ended expressions. In the configuration expressed by an open-ended expression, in addition to an essential component, an additional component may or may not be further included. The expression "consist of" is a closed-end expression. However, even in a configuration that is expressed by a closed-end expression, impurities present under ordinary circumstances as well as an additional element irrelevant to the technique of interest may be included. The expression "consist essentially of" is a semiclosed-end expression. A configuration expressed by a semiclosed-end expression tolerates addition of an element that does not substantially affect the fundamental, novel features of the technique of interest.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

Expressions such as "first" and "second" are used solely for differentiating a plurality of elements from each other. Such expressions do not limit the scope of these elements. For example, these expressions are independent of the order and the significance of these elements.

For example, the expression "at least one of A and B" includes "A or B" and "A and B". "At least one of A and B" may also be expressed as "A and/or B".

Any geometric term should not be interpreted solely in its exact meaning. Examples of geometric terms include "parallel", "vertical", "orthogonal", and the like. For example, as long as substantially the same or similar functions are obtained, the relative direction, angle, distance, and the like may vary. Any geometric term herein may include tolerances and/or errors in terms of design, operation, production, and/or the like. The dimensional relationship in each figure may not necessarily coincide with the actual dimensional relationship. For the purpose of assisting understanding for the readers, the dimensional relationship in each figure may have been changed. For example, length, width, thickness, and the like may have been changed. A part of a given configuration may have been omitted.

A singular form may also include its plural meaning, unless otherwise specified. For example, a particle may mean a plurality of particles, a group of particles, and a powdery and granular material.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Each of "not less than" and "not more than" is represented by an inequality symbol with an equality symbol, e.g., "$\leq$, $\geq$". Each of "more than" and "less than" is represented by an inequality symbol without an equality symbol, e.g., "$<$, $>$". Any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique of interest. Each numerical value may be expressed in significant figures. Unless otherwise specified, each measured value may be the average value obtained by multiple rounds of measurement. The number of rounds of measurement may be 3 or more, or may be 5 or more, or may be 10 or more. Generally, the greater the number of rounds of measurement is, the more reliable the average value is expected to be. Each measured value may be rounded off based on the number of the significant figures. Each measured value may include an error occurring due to the identification limit of the measurement apparatus, for example.

An apparatus, software, and/or the like used for measurement of various values is merely an example. It is possible to use a product similar to the apparatus and/or the like presented as an example. When a similar product is used, the measurement conditions may be adjusted to be suitable for the apparatus.

"D50" of a particle refers to a particle size in volume-based particle size distribution (cumulative distribution) at which the cumulative value reaches 50%. D50 is measured with a laser-diffraction particle size distribution analyzer, for example.

The "maximum Feret diameter" of a particle is determined in a scanning electron microscope (SEM) image. In an SEM image, it refers to the length of the long side of a circumscribing rectangular (an oblong or a square) that circumscribes the particle. When the circumscribing rectangular is square, the length of the long side refers to the length of a side.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include at least one selected from the group consisting of alkyl group, alkenyl group, alkynyl group, cycloalkyl group, unsaturated cycloalkyl group, aromatic group, heterocyclic group, halogen atom (F, Cl, Br, **I,** etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like, for example. These substituents may be further substituted. When there are two or more substituents, these substituents may be the same as one another or may be different from each other. A plurality of substituents may be bonded together to form a ring.

<Positive Electrode Active Material>

A positive electrode active material includes a plurality of secondary particles and a plurality of titanium bodies. Each of the secondary particles includes primary particles. The positive electrode active material may include a primary particle that is not a constituent of a secondary particle. At least one of the titanium bodies is present on the surface of a primary particle. The positive electrode active material may include a titanium body that is present at a position other than on the surface of a primary particle. The positive electrode active material may be a powdery and granular material, for example.

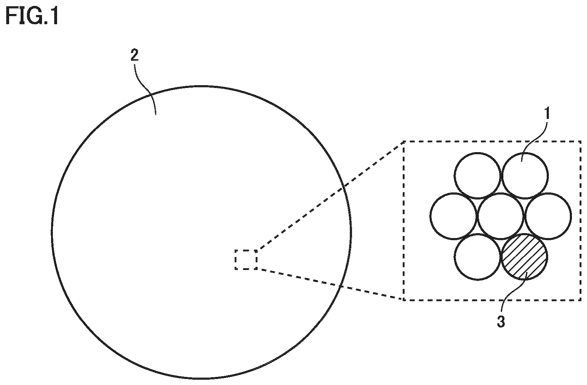

Fig. 1 is a conceptual view illustrating a secondary particle, primary particles, and a titanium body that is present on the surface of a primary particle, in a positive electrode active material according to the present embodiment. A secondary particle 2 is a group of primary particles 1. In other words, secondary particle 2 includes a plurality of primary particles 1. A titanium body 3 is present on the surface of primary particle 1. The surface of primary particle 1 on which titanium body 3 is present may be a grain boundary of primary particle 1, and may be part of the surface of secondary particle 2. Preferably, at least one titanium body 3 is present at a grain boundary of primary particle 1. The expression that titanium body 3 is present at a grain boundary of primary particle 1 means that titanium body 3 is in contact with a grain boundary at which two primary particles 1 are in contact with each other. The expression that titanium body 3 is present on the surface of secondary particle 2 means that at least part of the surface of titanium body 3 is exposed at the surface of secondary particle 2. The presence of titanium body 3 on the surface of primary particle 1 can be checked in an SEM image.

With titanium body 3 being present on the surface of primary particle 1, the positive electrode active material according to the present embodiment can make it possible to further lower the reaction resistance of the lithium secondary battery. One of the factors that affect the amount of reaction resistance of the lithium-ion secondary battery can be interface resistance at a reaction surface of the positive electrode active material. In the positive electrode active material according to the present embodiment, on the surface of primary particle 1 that constitutes secondary particle 2, titanium body 3 including titanium oxide having a rutile-type structure is present which can have a comparable permittivity to the solvent contained in the electrolyte solution; and, as a result, interface resistance at a reaction surface of the positive electrode active material is lowered, and, thereby, reaction resistance of the lithium-ion secondary battery can be lowered. In addition, when titanium body 3 is present at a grain boundary of primary particle 1 constituting secondary particle 2, interface resistance at a reaction surface of the positive electrode active material is expected to be further lowered and, thereby, reaction resistance of the lithium-ion secondary battery is expected to be further lowered.

Titanium bodies 3 include titanium oxide having a rutile-type structure. Titanium oxide ($TiO_2$) for industrial use can be of two crystal morphology types, namely rutile type and anatase type. Both the rutile type and the anatase type belong to the tetragonal system, and as compared to the anatase type, the rutile type is dense because the atoms are densely arranged. When titanium oxide having a rutile-type structure is included as titanium body 3, reaction resistance of the lithium-ion secondary battery is expected to be lowered. Titanium bodies 3 may include an anatase-type titanium oxide.

Preferably, titanium bodies 3 further include lithium titanate ($Li_4Ti_5O_{12}$) having a spinel-type structure. In the positive electrode active material according to the present embodiment, the amount-of-substance fraction (the fraction in terms of amount of substance; X) of the content of lithium titanate ($Li_4Ti_5O_{12}$) having a spinel-type structure relative to the total content of the lithium titanate having a spinel-type structure, the titanium oxide having a rutile-type structure, and the titanium oxide having an anatase-type structure is preferably from 0.01 to 0.50. Within this range, reaction resistance of the lithium-ion secondary battery is expected to be further lowered. The amount-of-substance fraction (X) may be 0.02 or more, or 0.03 or more, and it may be 0.40 or less, or 0.35 or less.

In the positive electrode active material, it is preferable that titanium body 3 be sufficiently adhered to the surface of primary particle 1. **In** this case, reaction resistance of the lithium secondary battery is expected to be further lowered. At the time of production of the positive electrode active material, some of the excess lithium and some of the excess titanium oxide present on the surface of primary particle 1 form solid solution to form lithium titanate having a spinel-type structure, and the resulting lithium titanate enhances adhesion force between the surface of primary particle 1 and titanium body 3. When the amount-of-substance fraction (X) of the lithium titanate thus formed falls within the above-mentioned range, it can be considered that a sufficient degree of adhesion force is ensured between titanium body 3 and the surface of primary particle 1.

The amount-of-substance fraction (X) is determined by X-ray absorption fine structure analysis (XAFS) of the positive electrode active material. XAFS measurement conditions are as follows.

Measurement apparatus: Hard X-Ray XAFS in Aichi Synchrotron Radiation Center, Aichi Science & Technology Foundation
Measurement range: 4955 to 5025 eV
Measurement method: Fluorescence method for positive electrode, and transmission method for reference material.

Regarding the measurement method mentioned above, the transmission method for measuring a reference material involves detecting an X-ray transmitted at the time of incidence X-ray irradiation, and the fluorescence method for measuring a positive electrode active material involves detecting a fluorescent X-ray produced at the time of incidence X-ray irradiation. Regardless of the difference in the measurement methods, spectra of the same type can be yielded. By normalizing the XAFS measurement data with analysis software Athena, it is possible to calculate the proportion of the content of a reference material in the positive electrode active material. Measurement is carried out using titanium oxide having a rutile-type structure, titanium oxide having an anatase-type structure, and lithium titanate having a spinel-type structure as reference materials, to calculate the amount-of-substance fraction (X) in the positive electrode active material.

The maximum Feret diameter of titanium body 3 may be from 100 nm to 500 nm. When the maximum Feret diameter of titanium body 3 falls within the above-mentioned range, reaction resistance of the lithium secondary battery is expected to be further lowered. The maximum Feret diameter of titanium body 3 may be 110 nm or more, or 120 nm or more, or 130 nm or more, or 140 nm or more, for example. The maximum Feret diameter of titanium body 3 may be 450 nm or less, or 400 nm or less, or 350 nm or less, or 300 nm or less, or 250 nm or less, for example.

The maximum Feret diameter of primary particle 1 may be 10 nm or more, or 20 nm or more, or 30 nm or more, or 40 nm or more, or 50 nm or more, or 60 nm or more, or 70 nm or more, or 80 nm or more, for example. The maximum Feret diameter of primary particle 1 may be 120 nm or less, or 100 nm or less, or 80 nm or less, or 60 nm or less, for example.

The D50 of the primary particles may be from 20 nm to 90 nm. The D50 of the primary particles may be 25 nm or more, or 30 nm or more, or 35 nm or more, or 40 nm or more, or 45 nm or more. The D50 of the primary particles may be 85 nm or less, or 80 nm or less, or 75 nm or less, or 70 nm or less, or 65 nm or less, or 60 nm or less, or 55 nm or less, or 50 nm or less.

The maximum Feret diameter of secondary particle 2 may be 1 $\mu$m or more, or 2.5 $\mu$m or more, or 5 $\mu$m or more, or 7.5 $\mu$m or more, or 10 $\mu$m or more, or 15 $\mu$m or more, or 20 $\mu$m or more, for example. The maximum Feret diameter of secondary particle 2 may be 50 $\mu$m or less, or 40 $\mu$m or less, or 30 $\mu$m or less, or 20 $\mu$m or less, or 15 $\mu$m or less, for example.

The D50 of the secondary particles may be 1 $\mu$m or more, or 2.5 $\mu$m or more, or 5 $\mu$m or more, or 7.5 $\mu$m or more, or 10 $\mu$m or more, or 15 $\mu$m or more, or 20 $\mu$m or more, for example. The D50 of the secondary particles may be 50 $\mu$m or less, or 40 $\mu$m or less, or 30 $\mu$m or less, or 20 $\mu$m or less, or 15 $\mu$m or less, for example.

Secondary particle 2 may have any form. Secondary particle 2 may have a spherical outer shape. When secondary particle 2 is spherical, packing properties are expected to be enhanced, for example. The sphericity of secondary particle 2 may be 0.85 or more, or 0.90 or more, or 0.95 or more. The sphericity of secondary particle 2 may be 1 or less, or 0.95 or less, or 0.90 or less, for example. "Sphericity" refers to the circularity in a surface SEM image (a two-dimensional image). The sphericity (circularity) is determined by the following equation.

$$\psi = 4\pi S/L^2$$

$\psi$: Sphericity (circularity)
$\pi$: Circular constant
S: Cross-sectional area of secondary particle 2 (the area of a region surrounded by the contour of secondary particle 2)
L: Perimeter of secondary particle 2 (the length of the contour of secondary particle 2)

The sphericity refers to the arithmetic mean of 30 secondary particles 2.

To least part of the surface of primary particle 1, a carbon layer may be adhered. The carbon layer includes carbon (C). The amount of the adhered carbon layer in mass fraction relative to secondary particle 2 may be 0.1% or more, or 0.5% or more, or 1% or more, or 2% or more, or 3% or more, or 4% or more, for example. The amount of the adhered carbon layer 4 in mass fraction relative to secondary particle 2 may be 5% or less, or 4% or less, or 3% or less, for example.

Primary particle 1 includes a phosphate compound having an olivine-type structure. Here, "olivine-type" refers to a crystal structure (an olivine-type structure) belonging to the space group Pnma. The space group is identified by X-ray diffraction (XRD) measurement of the powder. Primary particle 1 may be a single-phase compound, for example. As long as it includes an olivine-type crystalline phase, primary particle 1 may further include a phase that belongs to another space group. Primary particle 1 may further include an amorphous phase and/or the like, for example.

The phosphate compound having an olivine-type structure may include LFP, LMP, and/or the like, for example. In LMP, part of manganese (Mn) may be replaced by iron (Fe). Fe-replaced LMP is also called lithium manganese iron phosphate, and it is also expressed as LMFP. LMP may have a composition represented by the following general formula,

for example.

$$Li_{1-a}Mn_{1-x}Fe_xPO_4$$

For example, the relationship of $-0.5 \leq a \leq 0.5$ may be satisfied. The Fe-replacing amount (x) may be 0 or more, or 0.05 or more, or 0.1 or more, or 0.2 or more, or 0.3 or more, or 0.4 or more, or 0.5 or more, or 0.6 or more, or 0.7 or more, or 0.8 or more, or 0.9 or more, for example. The Fe-replacing amount (x) may be 0.9 or less, or 0.8 or less, or 0.7 or less, or 0.6 or less, or 0.5 or less, or 0.4 or less, or 0.3 or less, or 0.2 or less, or 0.1 or less, for example.

The LMFP may be doped with an element (a dopant) other than lithium (Li), Mn, Fe, phosphorus (P), and oxygen (O). The doping amount (the fraction in amount of substance relative to the amount of substance of Li) may be from 0.01 to 0.1, for example. The dopant may include at least one selected from the group consisting of boron (B), nitrogen (N), a halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and an actinoid, for example.

The positive electrode active material may further include another component as long as it includes a phosphate compound having an olivine-type structure. This another component may include lithium-nickel composite oxide (LNO), lithium-cobalt composite oxide (LCO), lithium-manganese composite oxide (LMO), and/or the like, for example. The mixing ratio (in mass) between the olivine-type phosphate compound and the another component may be "(olivine-type phosphate compound)/(another component)=9/1 to 1/9", or "(olivine-type phosphate compound)/(another component) =8/2 to 2/8", or "(olivine-type phosphate compound)/(another component)=7/3 to 3/7", or "(olivine-type phosphate compound)/(another component)=6/4 to 4/6", for example.

The LNO may have a crystal structure belonging to the space group R-3m, for example. The LNO may have a composition represented by the following general formula, for example.

$$Li_{1-a}Ni_xM_{1-x}O_2$$

In the formula, the relationships of $-0.5 \leq a \leq 0.5$, $0 \leq x \leq 1$ are satisfied. M may include, for example, at least one selected from the group consisting of Co, Mn, and Al. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied. For example, the relationship of $-0.4 \leq a \leq 0.4$, $-0.3 \leq a \leq 0.3$, $-0.2 \leq a \leq 0.2$, or $-0.1 \leq a \leq 0.1$ may be satisfied.

The LNO may include at least one selected from the group consisting of $LiNi_{0.9}Co_{0.1}O_2$, $LiNi_{0.9}Mn_{0.1}O_2$, and $LiNiO_2$, for example.

The LNO may be represented by the following general formula, for example. A compound represented by the following general formula may also be called "NCM".

$$Li_{1-a}Ni_xCo_yMn_zO_2$$

In the formula, the relationships of $-0.5 \leq a \leq 0.5$, $0 < x < 1$, $0 < y < 1$, $0 < z < 1$, $x+y+z=1$ are satisfied. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCM may include at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$, for example.

The LNO may be represented by the following general formula, for example. A compound represented by the following general formula may also be called "NCA".

$$Li_{1-a}Ni_xCo_yAl_zO_2$$

In the formula, the relationships of $-0.5 \leq a \leq 0.5$, $0 < x < 1$, $0 < y < 1$, $0 < z < 1$, $x+y+z=1$ are satisfied. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, the relationship of $0 < z \leq 0.1$,

$0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCA may include at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$, for example.

<Method of Producing Positive Electrode Active Material>

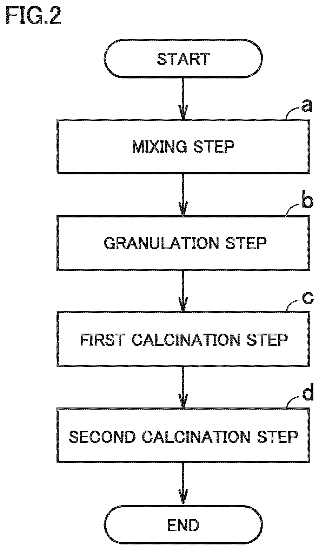

Fig. 2 is a schematic flowchart illustrating a method of producing a positive electrode active material according to the present embodiment. Hereinafter, "the method of producing a positive electrode active material according to the present embodiment" may be simply called "the present method". The present method may include "(a) a mixing step", "(b) a granulation step", "(c) a first calcination step", and "(d) a second calcination step", for example.

(a) Mixing Step

This step involves mixing a manganese compound, a lithium compound, a phosphate compound, and a solvent to form a slurry. In the following, a case in which LMFP is produced as a positive electrode active material will be described as an example. However, it should be noted that the positive electrode active material according to the present disclosure is not limited to LMFP.

For example, the manganese compound, the lithium compound, the phosphate compound, and an iron compound may be prepared in amounts that satisfy the composition ratio (in amount of substance) specified in the composition formula "$Li_{1-a}Mn_{1-x}Fe_xPO_4$ ($-0.5 \leq a \leq 0.5$, $0 \leq x < 1$)". The manganese compound may include manganese carbonate and/or the like, for example. The lithium compound may include lithium hydroxide and/or the like, for example. The phosphate compound may include lithium dihydrogen phosphate and/or the like, for example. The iron compound may include ferric phosphate and/or the like, for example.

In the present method, for producing a positive electrode active material in which a titanium body is present on the surface of a primary particle, it is preferable to mix titanium oxide having a rutile-type structure into the raw material mixture. The amount of the titanium oxide having a rutile-type structure to be added in mass fraction relative to the raw material mixture may be from 0.5 to 5%, for example. The titanium oxide having a rutile-type structure may be mixed after the second calcination step (d).

When it is intended to form a carbon layer on the surface of each primary particle, a carbon raw material is added to the raw material mixture. The carbon raw material may include a sugar, an organic acid, and/or the like, for example. The carbon raw material may include glucose, sucrose, fructose, citric acid, and/or the like, for example. The amount of the carbon raw material to be added in mass fraction relative to the raw material mixture may be from 1 to 20%, for example.

The solvent may include water and/or the like, for example. The solid concentration of the slurry in mass fraction may be from 20 to 40%, for example.

Wet grinding may be carried out to adjust the particle size in the slurry. For example, wet grinding may be carried out to achieve a D50 from 0.10 to 1 $\mu$m. Wet grinding may be carried out with a bead mill, a ball mill, a planetary mill, a jet mill, a planetary mixer, a homogenizer, and/or the like, for example. For obtaining a positive electrode active material having fine titanium bodies, wet grinding may be carried out with a bead mill using zirconium-containing beads, for example. The zirconium-containing beads may be beads containing $ZrO_2$. Wet grinding may be carried out in a vacuum, and for creating a vacuum, deaeration may be performed with the use of a diaphragm pump, for example.

(b) Granulation Step

This step involves forming first precursor particles by drying the slurry.

For example, spray drying may be carried out for granulation to produce first precursor particles. The temperature at the air inlet may be from 230 to 270°C, for example. The temperature at the air outlet may be from 100 to 130°C, for example. The spray rate may be from 16 to 20 mL/min, for example. The air intake pressure may be approximately from 1.8 to 2.2 MPa, for example. The nozzle pressure of the spray nozzle may be from 0.1 to 0.3 MPa, for example.

(c) First Calcination Step

This step involves performing first heat treatment of the first precursor particles to form second precursor particles.

Any heat treatment furnace (such as, for example, an electric furnace, a muffle furnace, and/or the like) may be used. The atmosphere in this step may be a nitrogen atmosphere, for example. The temperature of the first heat treatment may be from 200 to 500°C, for example. The time of the first heat treatment may be from 1 to 3 hours, for example.

(d) Second Calcination Step

This step involves performing second heat treatment of the second precursor particles to produce a phosphate compound having an olivine-type structure.

The same heat treatment furnace as in the first calcination step may be used. The atmosphere in this step may be a nitrogen atmosphere, for example. The temperature of the second heat treatment may be from 550 to 750°C, for example. The time of the second heat treatment may be from 4 to 6 hours, for example.

By cooling after the second calcination step (d), it is possible to obtain a positive electrode active material described above.

<Battery>

In some present embodiments, the battery has a monopolar structure. In some present embodiments, the battery has a bipolar structure. As an example, a battery having a bipolar structure (a bipolar battery) will be described.

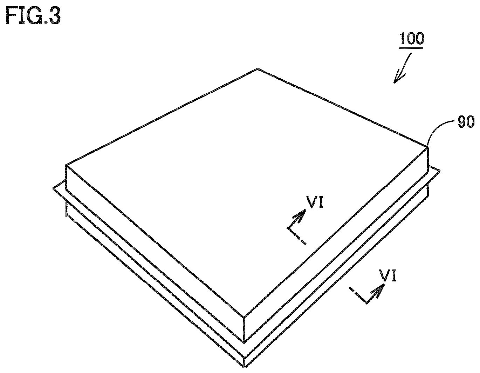

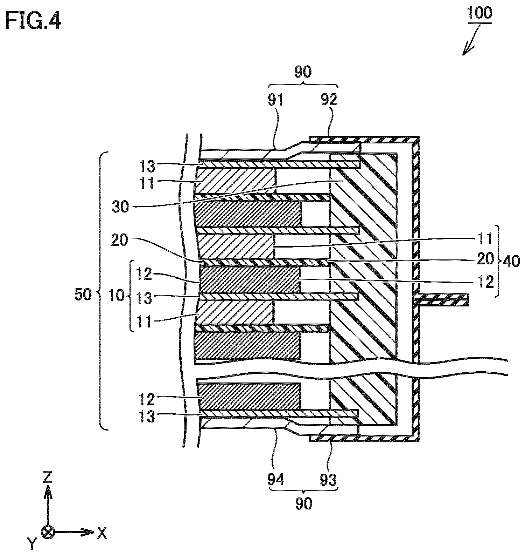

Fig. 3 is a schematic perspective view illustrating a battery according to the present embodiment. Fig. 4 is a schematic view of a cross section cut along the line VI-VI in Fig. 3. Hereinafter, "perpendicular-to-plane direction" refers to the direction of a normal to the surface of a sheet-form member (such as a foil sheet or an electrode, for example). "In-plane direction" refers to any direction that is orthogonal to the perpendicular-to-plane direction. In Fig. 4, the Z-axis direction corresponds to the perpendicular-to-plane direction. Each of the X-axis direction and the Y-axis direction is an example of an in-plane direction.

A battery 100 includes an exterior package 90 and a power generation element 50. Exterior package 90 accommodates power generation element 50. Exterior package 90 may include a first current collector plate 91, a first laminated film 92, a second laminated film 93, and a second current collector plate 94, for example. First laminated film 92 and second laminated film 93 are joined to each other at an end in an in-plane direction. At the joint portion between first laminated film 92 and second laminated film 93, a sealing material (not illustrated) may be interposed between first laminated film 92 and second laminated film 93.

At the ends in the stacking direction (the Z-axis direction), first current collector plate 91 and second current collector plate 94 are joined to power generation element 50, respectively. First laminated film 92 is joined to first current collector plate 91. Second laminated film 93 is joined to second current collector plate 94. At the joint portion between the current collector plate and the laminated film, a sealing material (not illustrated) may be interposed between the current collector plate and the laminated film.

Power generation element 50 includes a plurality of bipolar electrodes 10. Bipolar electrodes 10 are stacked in the perpendicular-to-plane direction (the Z-axis direction). In the perpendicular-to-plane direction, each bipolar electrode 10 includes a positive electrode layer 11, a current-collecting foil sheet 13, and a negative electrode layer 12 in this order. In an in-plane direction (for example, the X-axis direction), current-collecting foil sheet 13 extends outwardly beyond positive electrode layer 11 and negative electrode layer 12. For example, current-collecting foil sheet 13 may extend outwardly beyond positive electrode layer 11 and negative electrode layer 12 for the entire periphery in an in-plane direction.

Current-collecting foil sheet 13 is a conductor. For example, current-collecting foil sheet 13 may include a metal foil sheet, an electrically-conductive resin layer, and/or the like. For example, current-collecting foil sheet 13 may be formed by bonding an Al foil sheet and a Cu foil sheet together. A surface of current-collecting foil sheet 13 may have a carbon material applied thereto. The carbon material may include carbon black and/or the like, for example.

Power generation element 50 includes a sealing material 30. At an end in an in-plane direction, sealing material 30 is attached to current-collecting foil sheet 13. For example, sealing material 30 may be heat-sealed to current-collecting foil sheet 13. For example, sealing material 30 may be provided along the entire periphery in an in-plane direction. Sealing material 30 may include a resin material and/or the like, for example. Sealing material 30 seals interstices between current-collecting foil sheets 13 that are adjacent to each other in the perpendicular-to-plane direction. The interstices between current-collecting foil sheets 13 are thus sealed with sealing material 30, and thereby cells 40 are formed. A cell 40 is the smallest constituent unit of power generation element 50. Because it includes a plurality of cells 40, battery 100 may also be referred to as "a bipolar module". Each of cells 40 is hermetically sealed. Cells 40 are segregated from each other. Each of cells 40 includes positive electrode layer 11, a separator 20, negative electrode layer 12, and an electrolyte solution.

(Positive Electrode Layer)

Positive electrode layer 11 is adhered to one side of current-collecting foil sheet 13. For example, a groove may be formed in positive electrode layer 11. Positive electrode layer 11 may be formed in stripes, for example. Positive electrode layer 11 includes a positive electrode active material. That is, the electrode includes a positive electrode active material. The details of the positive electrode active material are as described above.

In addition to the positive electrode active material, positive electrode layer 11 may further include a conductive material, a binder, and the like, for example. The amount of the conductive material to be used may be, for example, from 0.1 to 10 parts by mass relative to 100 parts by mass of the positive electrode active material. The conductive material may include any component. The conductive material may include at least one selected from the group consisting of graphite, acetylene black (AB), Ketjenblack (registered trademark), vapor grown carbon fibers (VGCFs), carbon nanotubes (CNTs), and graphene flakes (GFs), for example.

The amount of the binder to be used may be, for example, from 0.1 to 10 parts by mass relative to 100 parts by mass of the positive electrode active material. The binder may include any component. The binder may include at least one selected from the group consisting of polyvinylidene difluoride (PVdF), vinylidene difluoride-hexafluoropropylene copolymer (PVdF-HFP), polytetrafluoroethylene (PTFE), carboxymethylcellulose (CMC), polyacrylic acid (PAA), polyvinyl alcohol (PVA), polyvinylpyrrolidone (PVP), polyoxyethylene alkyl ether, and derivatives of these, for example.

Positive electrode layer 11 may further include an inorganic filler, an organic filler, a solid electrolyte, a surface modifier, a dispersant, a lubricant, a flame retardant, a protective agent, a flux, a coupling agent, an adsorbent, and/or the like, for example. Positive electrode layer 11 may include polyoxyethylene allylphenyl ether phosphate, zeolite, silane coupling agent, $MoS_2$, $WO_3$, and/or the like, for example.

(Negative Electrode Layer)

Negative electrode layer 12 is adhered to one side of current-collecting foil sheet 13. Negative electrode layer 12 is positioned on the opposite side to the side on which positive electrode layer 11 is positioned. The area of negative electrode layer 12 may be greater than that of positive electrode layer 11. Negative electrode layer 12 includes a negative electrode active material.

The negative electrode active material may be in particle form, or may be in sheet form, for example. The D50 of the negative electrode active material may be 1 $\mu$m or more, or 5 $\mu$m or more, or 10 $\mu$m or more, for example. The D50 of the negative electrode active material may be 30 $\mu$m or less, or 20 $\mu$m or less, or 15 $\mu$m or less, or 10 $\mu$m or less, for example.

The negative electrode active material may include any component. The negative electrode active material may include at least one selected from the group consisting of carbon-based active material, alloy-based active material, Si-C composite material, Li metal, Li-based alloy, and lithium titanate, for example. In some present embodiments, the battery may be a Li-metal negative electrode battery.

The carbon-based active material may include at least one selected from the group consisting of graphite, soft carbon, and hard carbon, for example. The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.

The surface of the graphite may be covered with amorphous carbon, for example. The surface of the graphite may be covered with another type of material, for example. This another type of material may include at least one selected from the group consisting of P, W, Al, and O, for example. The another type of material may include at least one selected from the group consisting of $Al(OH)_3$, AlOOH, $Al_2O_3$, $WO_3$, $Li_2CO_3$, $LiHCO_3$, and $Li_3PO_4$, for example.

The alloy-based active material may include at least one selected from the group consisting of Si, Li silicate, SiO, Si-based alloy, tin (Sn), SnO, and Sn-based alloy, for example.

SiO may be represented by the following general formula, for example.

$$SiO_x$$

In the formula, the relationship of $0<x<2$ is satisfied. For example, the relationship of $0.5\leq x\leq 1.5$ or $0.8\leq x\leq 1.2$ may be satisfied.

"Si-C composite material" refers to a composite material composed of a carbon-based active material (such as graphite) and an alloy-based active material (such as Si). For example, Si microparticles may be dispersed inside carbon particles. For example, Si microparticles may be dispersed inside graphite particles. For example, Li silicate particles may be covered with a carbon material (such as amorphous carbon).

(Separator)

Separator 20 is capable of separating positive electrode layer 11 from negative electrode layer 12. Separator 20 is electrically insulating. Separator 20 may include at least one selected from the group consisting of a resin film (a polymer film), an inorganic particle layer, and an organic particle layer, for example. Separator 20 may include a resin film and an inorganic particle layer, for example.

The resin film is porous. The resin film may include a microporous film, a nonwoven fabric, and/or the like, for example. The resin film includes a resin skeleton. The resin skeleton may be continuous in mesh form, for example. Gaps in the resin skeleton form pores. The resin film allows an electrolyte solution to permeate therethrough. The resin film may have an average pore size of 1 $\mu$m or less, for example. The resin film may have an average pore size from 0.01 to 1 $\mu$m, or from 0.1 to 0.5 $\mu$m, for example. "Average pore size" may be measured by mercury porosimetry. The resin film may have a Gurley value from 50 to 250 s/100cm$^3$, for example. "Gurley value" may be measured by a Gurley test method.

The resin film may include at least one selected from the group consisting of an olefin-based resin, a polyurethane-based resin, a polyamide-based resin, a cellulose-based resin, a polyether-based resin, an acrylic-based resin, a polyester-based resin, and the like, for example. The resin film may include at least one selected from the group consisting of polyethylene (PE), polypropylene (PP), polyamide (PA), polyamide-imide (PAI), polyimide (PI), aromatic polyamide (aramid), polyphenylene ether (PPE), and derivatives of these, for example. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may be made of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

The inorganic particle layer may be formed on the surface of the resin film. The inorganic particle layer may be formed on only one side of the resin film, or may be formed on both sides of the resin film. The inorganic particle layer may be formed on the side facing the positive electrode layer 11, or may be formed on the side facing the negative electrode layer 12. The inorganic particle layer may be formed on the surface of positive electrode layer 11, or may be formed on the surface of negative electrode layer 12.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include at least one selected from the group consisting of an acrylic-based resin, a polyamide-based resin, a fluorine-based resin, an aromatic-polyether-based resin, and a liquid-crystal-polyester-based resin, and the like, for example.

Separator 20 may include an organic particle layer, for example. Separator 20 may include an organic particle layer instead of the resin film, for example. Separator 20 may include an organic particle layer instead of the inorganic particle layer, for example. Separator 20 may include both the resin film and an organic particle layer. Separator 20 may include both the inorganic particle layer and an organic particle layer. Separator 20 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include at least one selected from the group consisting of PE, PP, PTFE, PI, PAI, PA, aramid, and the like, for example. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 20 may include a mixed layer, for example. The mixed layer includes both inorganic particles and organic particles.

(Electrolyte Solution)

The electrolyte solution is a liquid electrolyte. The electrolyte solution includes a solute and a solvent. The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. "Mol/L" may also be expressed as "M". The solute includes a supporting salt (a Li salt). The solute may include an inorganic acid salt, an imide salt, an oxalato complex, a halide, and/or the like, for example. The solute may include at least one selected from the group consisting of LiPF$_6$, LiBF$_4$, LiClO$_4$, LiAsF$_6$, LiSbF$_6$, LiN(SO$_2$F)$_2$ "LiFSI", LiN(SO$_2$CF$_3$)$_2$ "LiTFSI", LiB(C$_2$O$_4$)$_2$ "LiBOB", LiBF$_2$(C$_2$O$_4$) "LiDFOB", LiPF$_2$(C$_2$O$_4$)$_2$ "LiDFOP", LiPO$_2$F$_2$, FSO$_3$Li, LiI, LiBr, and derivatives of these, for example.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these, for example.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate) =3/7 to 1/9", for example.

The solvent may include EC, FEC, EMC, DMC, and DEC, for example. The volume ratio of these components may satisfy the relationship represented by the following equation, for example.

$$V_{EC}+V_{FEC}+V_{EMC}+V_{DMC}+V_{DEC}=10$$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The relationships of $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$ are satisfied.

For example, the relationship of $1 \leq V_{EC} \leq 2$ or $2 \leq V_{EC} \leq 3$ may be satisfied.

For example, the relationship of $1 \leq V_{FEC} \leq 2$ or $2 \leq V_{FEC} \leq 4$ may be satisfied.

For example, the relationship of $3 \leq V_{EMC} \leq 4$ or $6 \leq V_{EMC} \leq 8$ may be satisfied.

For example, the relationship of $3 \leq V_{DMC} \leq 4$ or $6 \leq V_{DMC} \leq 8$ may be satisfied.

For example, the relationship of $3 \leq V_{DEC} \leq 4$ or $6 \leq V_{DEC} \leq 8$ may be satisfied.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example. In the above-described positive electrode active material included in positive electrode layer 11, the relative permittivity of the titanium bodies present on the surface of the primary particles is close to the relative permittivity of EC (which is 90). When the solvent includes EC, reaction resistance is expected to be further lowered. The relative permittivity of titanium oxide having a rutile-type structure is approximately from 70 to 100, and the relative permittivity of titanium oxide having an anatase-type structure is approximately from 30 to 50.

The electrolyte solution may include an ether-based solvent. The electrolyte solution may include at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these, for example.

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2, 4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these, for example.

The components described above as the solute and the solvent may be used as a trace component (an additive). The additive may include at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these, for example.

The electrolyte solution may include an ionic liquid. The ionic liquid may include at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these, for example.

**In** some present embodiments, the battery may include a gelled electrolyte. **In** other words, the battery may be a polymer battery. The gelled electrolyte may include an electrolyte solution and a polymer material. The polymer material may form a polymer matrix. The polymer material may include at least one selected from the group consisting of PVdF, PVdF-HFP, polyacrylonitrile (PAN), PVdF-PAN, polyethylene oxide (PEO), polyethylene glycol (PEG), and derivatives of these, for example.

[Examples]

[Production of Positive Electrode]

<No. 1>

(a) Mixing Step

Lithium hydroxide monohydrate, manganese carbonate, ferric phosphate, and lithium dihydrogen phosphate were prepared in amounts that satisfied the composition ratio specified in the composition formula "$Li_{1.04}Mn_{0.6}Fe_{0.4}PO_4$", and thus a raw material mixture 1 was prepared. Glucose was prepared in an amount of 8% in mass fraction relative to the total mass of raw material mixture 1. Raw material mixture 1 thus prepared, glucose, and water were mixed together to form a slurry. The solid concentration of the slurry was 30% in mass fraction. Wet grinding was carried out to achieve a D50 of 0.30 μm.

(b) Granulation Step

The slurry was spray dried to form first precursor particles. The target value of the D50 of the first precursor particles was 9±1 μm. The temperature at the air inlet was 250°C, the temperature at the air outlet of the spray dryer was 115±15°C, the spray rate was 10 mL/min, the air intake pressure was 2.0 MPa, and the nozzle pressure of the spray nozzle was 0.2±0.1 MPa.

(c) First Calcination Step

The first precursor particles thus obtained were calcined in a nitrogen atmosphere to form second precursor particles. The conditions in this step are as follows. Firstly, the furnace temperature was raised at a temperature raising rate of 3°C/minute to reach 200°C. The furnace temperature was maintained at 200°C for 1 hour.

(d) Second Calcination Step

Following the first calcination step, the furnace temperature was raised at a temperature raising rate of 5°C/minute to reach 650°C. The furnace temperature was maintained at 650°C for 5 hours. Subsequently, the furnace temperature was lowered at a temperature lowering rate of 2°C/minute to reach 400°C. Furthermore, the furnace temperature was lowered at a temperature lowering rate of 15°C/minute to reach room temperature. In this way, a positive electrode active material composed of secondary particles including primary particles including $Li_{1.04}Mn_{0.6}Fe_{0.4}PO_4$ was obtained.

(Preparation of Coin Cell)

The positive electrode active material, a conductive material (acetylene black) and a binder (PVdF) were mixed together to form a mixture. The mixing ratio (in mass) was "(positive electrode active material)/(conductive material)/-binder=92/5/3". The mixture was dispersed in a solvent (N-methyl-2-pyrrolidone) to form a paste. The solid concentration of the paste was 50% in mass fraction. The paste was applied to the surface of an Al foil sheet, followed by drying, and thereby a positive electrode layer was formed. The density of the positive electrode layer was adjusted to 1.8 g/cm$^3$ with a roll press, and thereby a positive electrode raw sheet was formed. The positive electrode raw sheet was vacuum dried at 120°C for 12 hours. After drying, the positive electrode raw sheet was die-cut to form a disk-shaped sample (diameter, 14 mm).

Inside a glove box, a coin cell was assembled. The cell configuration is as described below.

Working electrode: Disk-shaped sample (positive electrode)
Counter electrode: Li foil sheet
Separator: Porous polymer film
Electrolyte solution: "EC/DMC=3/7 (in volume)", $LiPF_6$ (1 mol/L)

<No. 2 to No. 6>

Except that the below-described changes (i) and (ii) were made in the mixing step (a), the same operation as in No. 1 was carried out to produce positive electrode active materials.

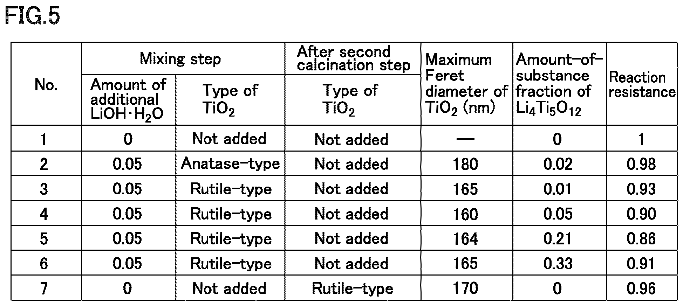

(i) An additional amount of lithium hydroxide monohydrate ($LiOH \cdot H_2O$) specified in Fig. 5 (in mass, which is a relative amount relative to the mass of lithium hydroxide monohydrate ($LiOH \cdot H_2O$) included in raw material mixture 1 defined as 1) was further added.

(ii) Titanium oxide ($TiO_2$) was prepared in an amount of 1% in mass fraction relative to the total mass of raw material mixture 1; and then the raw material mixture 1 prepared in the above manner, the above-mentioned additional amount of lithium hydroxide monohydrate, glucose, the titanium oxide, and water were mixed together to form a slurry. As the titanium oxide, one of the following titanium oxides was used. The type of titanium oxide used in each sample is specified in Fig. 5.

·Powder-form anatase-type titanium oxide (expressed as "Anatase-type" in Fig. 5)
·Powder-form rutile-type titanium oxide (expressed as "Rutile-type" in Fig. 5)

<No. 7>

After the second calcination step (d), titanium oxide of the type specified in Fig. 5 was added in a mass fraction of 1% relative to the total mass of raw material mixture 1.

[Evaluation]

<Measurement in SEM Image>

In an SEM image, the presence or absence of titanium bodies on the surface of primary particles was checked, and the maximum Feret diameter of the titanium bodies was measured. In the positive electrode active materials of No. 2 to No. 7, the presence of a plurality of titanium bodies was observed on the surface of primary particles. In the positive electrode active materials of No. 2 to No. 7, the number average value of the maximum Feret diameters of freely-selected 10 titanium bodies present on the surface of primary particles was calculated. The results of calculation are given in Fig. 5.

(XAFS Measurement)

The positive electrode was measured by XAFS by the above-described method, and the amount-of-substance fraction (X) of $Li_4Ti_5O_{12}$ in the positive electrode active material was calculated. The results of calculation are given in Fig. 5.

<Evaluation>

(Reaction Resistance)

By the procedure described below, reaction resistance was measured. After the state of charge (SOC) of the above-mentioned coin cell was adjusted to 50%, the positive electrode was taken out and then the positive electrode was used to prepare a symmetry cell (a coin cell). As the electrolyte solution and the separator of the symmetry cell, those described above for the coin cell were used. Subsequently, with the use of a potentiostat (product from Solartron Analytical) to set the amplitude at 5 mV and also to change the frequency from 0.1 Hz to 100000 Hz in steps, alternating-current voltage was applied. Then, fitting of the Nyquist plot thus obtained was performed with an equivalent circuit ($R_1$ +$R_1C$ circuit), and $R_1$ was regarded as the reaction resistance. Results are given in Fig. 5. The value of reaction resistance given in Fig. 5 is a value relative to the reaction resistance $R_1$ of No. 1, which is defined as 1.

<Results>

As seen in Fig. 5, when rutile-type titanium oxide is added, reaction resistance is lowered. Moreover, when the amount-of-substance fraction (X) of $Li_4Ti_5O_{12}$ is 0.01 or more, reaction resistance tends to be further lowered.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

**Claims**

1.   A positive electrode active material comprising:

   secondary particles (2); and
   titanium bodies (3), wherein
   each of the secondary particles (2) includes primary particles (1),
   each of the primary particles (1) includes a phosphate compound having an olivine-type structure,
   the titanium bodies (3) include titanium oxide having a rutile-type structure, and
   at least one of the titanium bodies (3) is present on a surface of the primary particle (1).

2.   The positive electrode active material according to claim 1, wherein at least one of the titanium bodies (3) is present on a surface of the primary particle (1) and also at a grain boundary of the primary particle (1).

3.   The positive electrode active material according to claim 1, wherein the titanium body (3) has a maximum Feret diameter from 100 nm to 500 nm.

4.   The positive electrode active material according to claim 1, wherein the titanium bodies (3) further include lithium titanate having a spinel-type structure.

5.   The positive electrode active material according to claim 4, wherein

   the titanium bodies (3) optionally further include titanium oxide having an anatase-type structure, and
   in the positive electrode active material, an amount-of-substance fraction of a content of the lithium titanate having a spinel-type structure relative to a total content of the lithium titanate having a spinel-type structure, the titanium oxide having a rutile-type structure, and the titanium oxide having an anatase-type structure is from 0.01 to 0.50.

6.   The positive electrode active material according to claim 1, wherein the phosphate compound having an olivine-type structure is lithium manganese iron phosphate.

7.   A battery comprising the positive electrode active material according to any one of claims 1 to 6.

8.   A battery (100) comprising:

   a positive electrode;
   a negative electrode; and
   an electrolyte solution, wherein
   the positive electrode includes the positive electrode active material according to any one of claims 1 to 6, and
   the electrolyte solution includes ethylene carbonate.

9.   The battery (100) according to claim 8, having a bipolar structure.

10.  A method of producing a positive electrode active material, wherein

   the method is a method of producing the positive electrode active material according to any one of claim 1 to 6, and

the method comprises:

(a) mixing a manganese compound, a lithium compound, a phosphate compound, titanium oxide having a rutile-type structure, and a solvent to form a slurry;
(b) forming first precursor particles by drying the slurry;
(c) performing first heat treatment of the first precursor particles to form second precursor particles; and
(d) performing second heat treatment of the second precursor particles to produce a phosphate compound having an olivine-type structure.

FIG.1

FIG.2

```
        ┌─────────────┐
        │    START    │
        └──────┬──────┘
               │
        ┌──────▼──────┐  a
        │ MIXING STEP │
        └──────┬──────┘
               │
        ┌──────▼──────────┐  b
        │ GRANULATION STEP│
        └──────┬──────────┘
               │
        ┌──────▼──────────────┐  c
        │ FIRST CALCINATION   │
        │        STEP         │
        └──────┬──────────────┘
               │
        ┌──────▼──────────────┐  d
        │ SECOND CALCINATION  │
        │        STEP         │
        └──────┬──────────────┘
               │
        ┌──────▼──────┐
        │     END     │
        └─────────────┘
```

FIG.3

FIG.4

FIG.5

| No. | Mixing step | | After second calcination step | Maximum Feret diameter of $TiO_2$ (nm) | Amount-of-substance fraction of $Li_4Ti_5O_{12}$ | Reaction resistance |
|---|---|---|---|---|---|---|
| | Amount of additional $LiOH \cdot H_2O$ | Type of $TiO_2$ | Type of $TiO_2$ | | | |
| 1 | 0 | Not added | Not added | — | 0 | 1 |
| 2 | 0.05 | Anatase-type | Not added | 180 | 0.02 | 0.98 |
| 3 | 0.05 | Rutile-type | Not added | 165 | 0.01 | 0.93 |
| 4 | 0.05 | Rutile-type | Not added | 160 | 0.05 | 0.90 |
| 5 | 0.05 | Rutile-type | Not added | 164 | 0.21 | 0.86 |
| 6 | 0.05 | Rutile-type | Not added | 165 | 0.33 | 0.91 |
| 7 | 0 | Not added | Rutile-type | 170 | 0 | 0.96 |

Europäisches
Patentamt

European
Patent Office

Office européen
des brevets

## EUROPEAN SEARCH REPORT

Application Number

EP 25 20 3956

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 635 350 A (BEIJING INST TECHNOLOGY) 27 January 2010 (2010-01-27) | 1-3,6-10 | INV. H01M4/36 |
| A | * abstract * <br> * example 1 * <br> * figure 1 * <br> ----- | 4,5 | H01M4/58 <br> H01M10/0525 |
| X | XU YAPING ET AL: "Enhanced electrochemical performance of LiFePO4cathode with carbon-TiO2hybrid coating", <br> JOURNAL OF MATERIAL SCIENCE, KLUWER ACADEMIC PUBLISHERS, DORDRECHT, <br> vol. 51, no. 22, 20 July 2016 (2016-07-20) <br> , pages 10026-10034, XP036039072, <br> ISSN: 0022-2461, DOI: 10.1007/S10853-016-0229-5 <br> [retrieved on 2016-07-20] <br> * abstract * <br> * page 10028, left-hand column, paragraph second * <br> * page 10028, right-hand column, paragraph thirds * <br> * figure 1 * <br> ----- <br> -/-- | 1,2,6,7 | |

TECHNICAL FIELDS
SEARCHED (IPC)

H01M

The present search report has been drawn up for all claims

| Place of search | Date of completion of the search | Examiner |
|---|---|---|
| The Hague | 2 March 2026 | Rosciano, Fabio |

EPO FORM 1503 03.82 (P04C01)

Europäisches
Patentamt

European
Patent Office

Office européen
des brevets

# EUROPEAN SEARCH REPORT

**Application Number**

EP 25 20 3956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU YAPING ET AL: "Improve electrochemical performance of LiFePO4/C cathode by coating Ti2O3through a facile route", IONICS, KIEL, DE, vol. 21, no. 12, 6 August 2015 (2015-08-06), pages 3159-3167, XP035560512, ISSN: 0947-7047, DOI: 10.1007/S11581-015-1521-0 [retrieved on 2015-08-06] * abstract * * page 3161, left-hand column, paragraph first * * page 3161, right-hand column, paragraph first * * figure 2 * | 1,2,6,7 | |
| X | EP 2 079 122 A1 (ADVANCED LITHIUM ELECTROCHEMIS [TW]) 15 July 2009 (2009-07-15) * abstract * * paragraph [0095] * * paragraph [0119] - paragraph [0120] * | 1,2,6,7 | |
| A | GU HAOYAN ET AL: "Electrochemical Properties of Li4Ti5O12 Coated LiMn0.6Fe0.4PO4 Prepared by Rheological Phase Reaction Method", JOURNAL OF THE ELECTROCHEMICAL SOCIETY, vol. 171, 4 April 2024 (2024-04-04), pages 1-9, XP093371541, Pennington, NJ ISSN: 0013-4651, DOI: 10.1149/1945-7111 Retrieved from the Internet: URL:https://iopscience.iop.org/article/10.1149/1945-7111/ad377e> * abstract * | 1-10 | |

**TECHNICAL FIELDS SEARCHED (IPC)**

The present search report has been drawn up for all claims

| Place of search | Date of completion of the search | Examiner |
|---|---|---|
| The Hague | 2 March 2026 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 20 3956

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2026

| Patent document cited in search report | | Publication date | Patent family member(s) | | Publication date |
|---|---|---|---|---|---|
| CN 101635350 | A | 27-01-2010 | NONE | | |
| EP 2079122 | A1 | 15-07-2009 | CA | 2643861 A1 | 14-05-2009 |
| | | | EP | 2079122 A1 | 15-07-2009 |
| | | | JP | 2009123705 A | 04-06-2009 |
| | | | KR | 20090050015 A | 19-05-2009 |
| | | | TW | 200921966 A | 16-05-2009 |
| | | | US | 2009081549 A1 | 26-03-2009 |

EPO FORM P0459

For more details about this annex : see Official Journal of the European Patent Office, No. 12/82

**REFERENCES CITED IN THE DESCRIPTION**

**Patent documents cited in the description**

- JP 2024179757 A

- JP 2017021999 A